# EUROPEAN PATENT APPLICATION

(11) **EP 4 799 448 A2**
(43) Date of publication of application: **02.09.2026**
(21) Application number: 26183672.0
(22) Date of filing: 29.07.2022
(51) Int. Cl.: A01B 33/06

(54) **HOEING MACHINE**

(30) Priority: 19.08.2021 NL 2028991; 10.05.2022 NL 2031816
(62) Document number(s) of the earlier application(s) in accordance with Art. 76 EPC: 22187741.8 / 4 136 949
(71) Applicant: Van Tuijl Innovations B.V., 4043 KB Opheusden (NL)
(72) Inventor: van Ommeren, Adrianus, 4043 KB Opheusden (NL); van Tuijl, Jan Gijsbert, 4043 KB Opheusden (NL)
(74) Representative: De Vries & Metman

(57) **Abstract**

Hoeing machine (1) comprising a main frame and a swivel arm with a rotor head (22) carrying a plurality of downwardly extending hoeing elements (18) and a drive for rotating the rotor head. The swivel arm comprises a surface-following member (37) arranged to follow a soil surface during movement of the hoeing machine over the soil surface. The surface-following member comprises a soil contact surface (38) of the rotor head between the hoeing elements. The rotor head can also comprise an impact absorber (51) with a fender (50) and a mover or spring element (57), such as a gas spring, forcing the fender to a position in front of the swivel head (22), when viewed in a driving direction.

## Description

The invention relates to a hoeing machine comprising a main frame and at least one swivel arm with a rotor head carrying a plurality of downwardly extending hoeing elements, such as hoeing teeth or prongs. The hoeing machine also comprises a drive for rotating the rotor head. The rotor head can be arranged to rotate the hoeing elements in a substantially horizontal plane.

Hoeing machines of this type are for example used in vineyards, fruit tree orchards and tree nurseries. For environmental reasons, chemical weed control is being replaced with mechanical means for removing weeds, such as tractor propelled hoeing machines powered through the power take-off shaft of the tractor.

Hoeing machines can be provided with a swivel arm which can be moved sidewards relative to the travel direction of the hoeing machine during use, so as to allow the hoeing machine to reach soil between two adjacent trees in a row. WO 2015/173736 discloses a weed cutter with hinged frame comprising a cutter disc with fixed cutting blades. In use the hinging frame rests on a supporting wheel. With irregular ground surfaces, such as with potholes or protruding tree roots, the cutter disc follows up and down movement of the support wheel. As a result, the cutting blades cannot work the soil surface evenly.

The object of the invention is to provide a hoeing machine allowing very efficient and even working of the soil surface to be treated.

The object of the invention is achieved with a hoeing machine comprising a main frame and at least one swivel arm with a surface following member arranged to follow a soil surface during movement of the hoeing machine over the soil surface, the surface following member comprising a soil contact surface of the rotor head between the hoeing elements. As a result, the rotor head follows any height variation of the soil surface. In operation, the rotor head is the lowest part of the swivel arm, with the soil contact surface and the hoeing elements engaging the soil surface. In such a configuration the level of the hoeing elements is not determined by the level of a supporting wheel, but rather by the soil contact surface of the rotor head. This enables adjustment of the working level of the hoeing elements by adjusting the level relative to the soil contact surface.

Since the rotor head follows the soil surface, the swivel arm is fully supported by the frame and cannot have a support wheel, at least not between the rotor head and a horizontal swivel axis of the swivel arm.

To further improve even working of the hoeing elements, the swivel arm can be pivotable about at least two axis of rotation, e.g., a vertical axis of rotation and at least one horizontal axis, in particular about an axis perpendicular to a longitudinal axis of the swivel arm. This way the swivel arm has an additional degree of freedom to follow the soil surface.

Swiveling about a vertical axis facilitates sideward movement. When the hoeing machine passes a tree, the swivel arm can be pushed inward towards the hoeing machine frame. After passing the tree, the rotor head can move back sidewards for cutting weed between the tree and a next tree.

Swiveling about a horizontal axis perpendicular to the longitudinal axis of the swivel arm allows the rotor head to closely follow height variations of the soil surface.

Optionally, the rotor head can be swiveling about the longitudinal axis of the swivel arm. In this way the rotor head can also adapt its position to local variations in the angle of inclination of the soil surface.

The soil contact surface can for example be cup-shaped, e.g., with a lowest point aligned with the axis of rotation of the rotor head.

The hoeing elements can have a hoeing level which is adjustable relative to the soil contact surface of the rotor head. This relative distance between the tips of the hoeing teeth tips and the soil contact surface defines the working depth of the hoeing teeth. In this way, hoeing can be adapted to the type and hardness of soil or the type of weed to be cut.

In a specific embodiment, a biasing element such as a gas spring can be used to bias the swivel arm to an extended position. When a tree is passed, the rotor head can passively be pushed back by the tree without needing active control of the swivel arm by a controller.

In another embodiment, one or more actuators can be used to actively control horizontal movement of the swivel arms in response to control signals, which may for example be generated by one or more sensors and/or feelers and/or a human operator.

To prevent damage of trees, the rotor head can have an outer circumferential edge provided with a bumper, e.g., of a rubber or elastomeric material. Good results are obtained if the bumper has a flat circumferential outer surface. This prevents concentrated impact loads when hitting a tree and substantially reduces damage to the trees. Such bumpers can also be used with outer types of hoeing machines, regardless of the presence of a surface-following member and/or a soil contact surface of the rotor head between the hoeing teeth.

In a further embodiment, the rotor head can be provided with a skirt or cylinder shielding the hoeing teeth. The hoeing elements and the ground following soil contact surface project from an open bottom side of the skirt. The skirt protects irrigation pipes and water hoses that may be present in the orchard or vineyard, or people or objects present in other operating environments. The skirt also limits rocketing of soil material loosened by the hoeing elements.

Optionally, the rotor head may comprise a combination of the teeth with flexible elements, i.e., flaps that flex outwardly due to centrifugal forces caused by rotation of the rotor head.

The invention also relates to a hoeing machine comprising at least one rotor head carrying a plurality of downwardly extending hoeing elements, and a drive for rotating the rotor head,
wherein the rotor head comprises a surface-following member which is vertically movable to follow a soil surface during movement of the hoeing machine over the soil surface,
wherein the surface-following member comprises a soil contact surface of the rotor head between the hoeing elements;
wherein the hoeing elements have a cutting level which is adjustable relative to the soil contact surface.

The rotor head can for example be suspended from a swiveling arm or from the main frame. In the latter case, the rotor head can for example be movable up and down along a vertical sliding guide, e.g., with a spring element supporting up or down movement. The hoeing machine may for example comprise one or more rows of such rotor heads, e.g., being movable up and down independently from each other.

In a further embodiment, the hoeing machine can for example be provided with an impact absorber to cushion impact loads on a tree or similar obstacle. Such an impact absorber can for example comprise a fender and a mover or spring element, such as a gas spring, forcing the fender to a position in front of the swivel head, when viewed in a driving direction. When the hoeing machine finds a tree or similar obstacle on its path, the fender will first hit the obstacle and move backward against the action of the spring element, until the swivel head hits the obstacle. This will flatten the impact load and avoid damage of the obstacle. It also allows to move the swivel arm with the rotor head very close along the trees, so hoeing is done very close to the trees.

The fender may for example comprises a carrier, such as a strip or bar, carrying one or more bumping elements, such as fixed or rotating rollers with a vertical rotational axis. The rollers can for example be made of a shock absorbing material, such as an elastomer, a rubber, a foam rubber or rubber-like material. The rotating rollers can for example be idle or driven. The rollers can be provided in one or more rows of rollers, e.g., in a staggered arrangement, or in any other suitable configuration, e.g., of the same or different size and/or materials.

Optionally, the one or more rollers or similar bumping elements are movable relative to the carrier by impact of an obstacle to be passed, between a primary position and a pressed position where the roller engages a contact, e.g., a reed contact, generating a control signal for a control unit of the swivel arm and/or a control unit of the impact absorber to withdraw the swivel arm and/or the impact absorber until the roller moves back into its primary position, e.g., by the action of a spring. As soon as the roller touches a tree or similar obstacle, the roller is pressed and triggers the control signal to slightly withdraw the swivel arm or the impact absorber, so effectively the impact absorber only lightly brushes the tree.

Alternatively, or additionally, the fender can be configured to engage a contact, when it is moved inwardly by the impact of an obstacle, similarly generating a control signal for a control unit of the swivel arm and/or a control unit of the impact absorber to withdraw the swivel arm and/or the impact absorber until the fender moves back into its primary position by the action of the mover or spring element.

The carrier can for example have one end hinged to the swivel arm or to an arm parallel to the swivel arm.

The disclosed impact absorber can be used with a hoeing machine, e.g., as disclosed above, or similarly with a mower, a brush sweeper for tree nurseries or a road sweeper with one or more rotating sweeping heads.

The power drive of the hoeing machine can for example be a drive train powered via the power take-off shaft of a tractor, e.g., with the hoeing machine being arranged behind the tractor or in an offset arrangement. Alternatively, the tilling apparatus can be a self-propelled carriage with a motor drive for driving the rotary supports, or the tilling apparatus can have any other suitable driving means.

The hoeing machine can for example be used as a weed cutter or for loosening and working a soil surface, e.g., vineyards, orchards, tree nurseries, cemeteries, parking lots, or similar areas with trees or lampposts or the like.

The invention is further explained with reference to the accompanying drawings showing exemplary embodiments.
Figure 1: shows an exemplary embodiment of a hoeing machine;
Figure 2: shows the hoeing machine of Figure 1 from the rear side;
Figure 3: shows a swivel arm of the hoeing machine in top view;
Figure 4: shows the swivel arm of Figure 3 in side view;
Figure 5: shows a rotor head of the hoeing machine in side view;
Figure 6: shows a rotor head of an alternative embodiment;
Figure 7: shows the rotor head of Figure 6 in top view;
Figure 8: shows an impact absorber of the rotor head of Figure 6;
Figure 9: shows an embodiment with a height adjustable second gas spring.

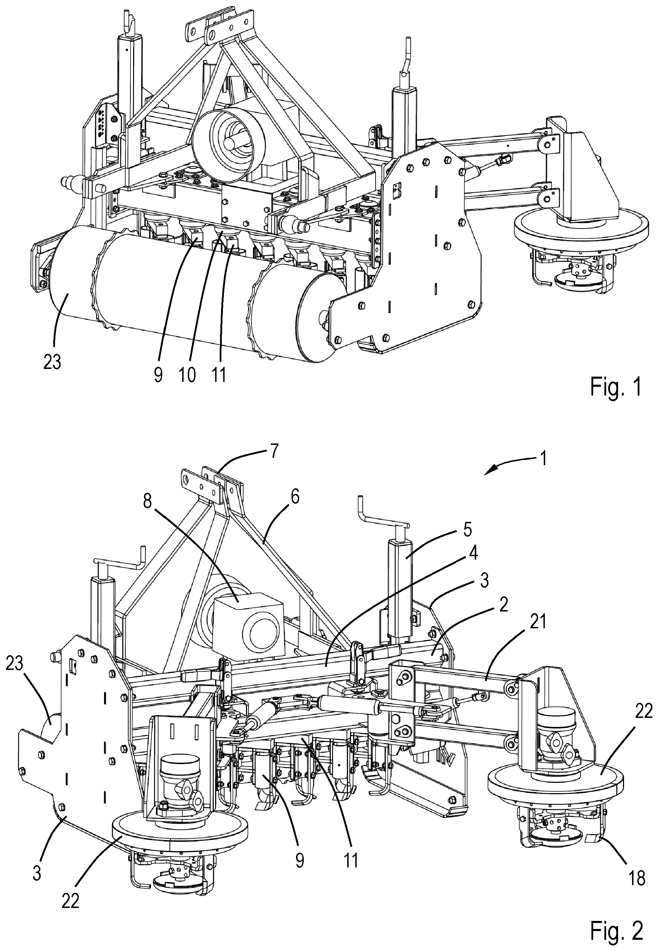

Figure 1 shows a hoeing machine 1, which can be coupled to a tractor and be driven via a power take-off shaft of the tractor. The hoeing machine 1 comprises a frame 2 with side walls 3, a central hollow beam 4 extending between the two side walls 3 and two parallel uprights 5 carried by the central hollow bar 4. The two uprights 5 carry and guide a hitch frame 6 in a height adjustable manner. A yoke 7 is mounted on top of the hitch frame 6 for connection to a tractor. On top of the central hollow bar 4 below the yoke 7, is a gear box 8 connectable to the power take-off shaft of a tractor.

A row of rotary supports 9 is suspended from a lower side of the central hollow beam 4. The rotary supports 9 comprise a rotary disc 10 and a holder frame 11 mounted to the lower side of the rotary disc 10. The rotary discs 10 are driven to rotate by means of the tractors power drive via the gear box 8 and a drive train hidden from view within the central hollow beam 4. The rotary supports 9 are driven to rotate about a vertical axis of rotation R.

The hoeing machine 1 further has two swivel arms 21, both carrying a single rotor head 22 with a set of downwardly extending hoeing elements or teeth 18. These rotor heads 22 serve to hoe areas besides the traveling path of the tractor, e.g., between trees.

At the front side of the hoeing machine 1 is a rotatable drum 23 with a substantially horizontal cylindrical axis for levelling and compacting the tilled soil. The drum 23 also contributes to stabilization of the hoeing machine during operation. Instead of a rotatable drum a sliding body or sledge can be used, if so desired.

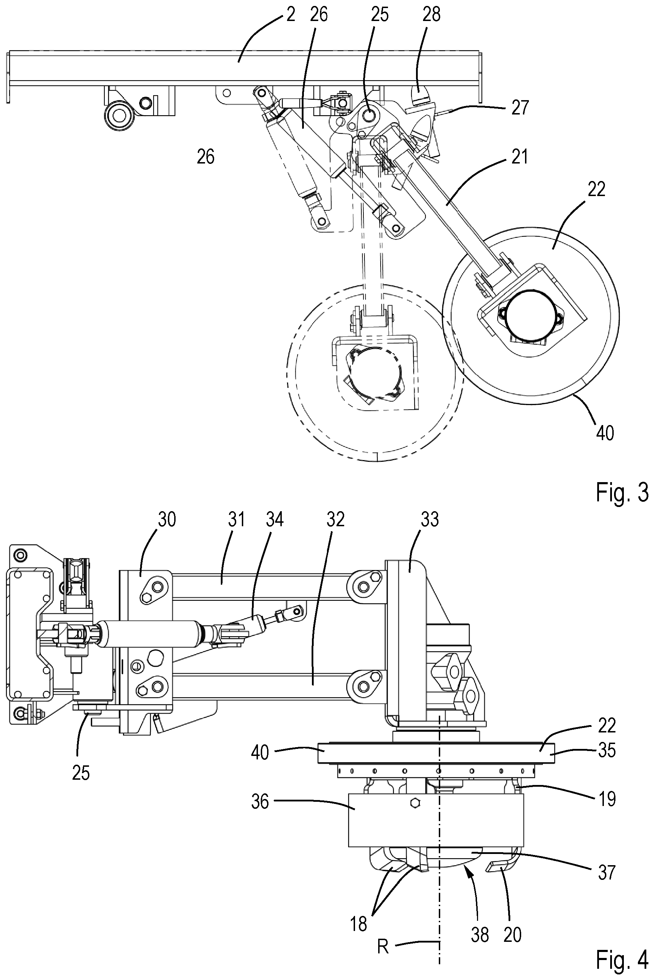

One of the swivel arms 21 is shown in top view in Figure 3. The swivel arm 21 is connected to the frame 2 by a pivot joint 25 defining a vertical swivel axis. The swivel arm 21 is swivelled about the pivot joint 25 between a retracted position (shown in Figure 3 in dotted lines) and an extended position (shown in uninterrupted lines). A first gas spring 26 biases the swivel arm 21 into the extended position. When a tree is passed, the tree can push back the rotor head 22 of the swivel arm 21 against the action of the first gas spring 26. After passing the tree, the swivel arm 21 flips back into the extended position so the rotor head 22 can work the soil surface directly next to the tree.

The swivel arm 21 is provided with a foot 27 comprising a damper 28 spacing the foot 27 from the frame 2 when the swivel arm 21 is in its extended position.

Figure 4 shows the swivel arm 21 in side view. The swivel arm 21 is a four bar linkage, in particular a parallelogram linkage with a foot link 30 fixed to the vertical pivot joint 25, an upper longitudinal link 31, a lower longitudinal link 32 which is parallel to the upper longitudinal link 31, and a rotor head link 33 carrying the rotor head 22. The lower and upper longitudinal links 31, 32 are of even length and have one end pivotally connected to the foot link 30, and an opposite end pivotally connected to the rotor head link 33. The upper and lower links 31, 32 remain parallel while swivelling up and down relative to the foot link 30 and the rotor head link 33 remains parallel to the foot link 30.

A second gas spring 34 extends between the foot linkage 30 and the upper linkage 31. The second gas spring 34 is a weight control gas spring which acts against the weight of the rotor head, making it easier for the rotor head to accurately follow surface irregularities.

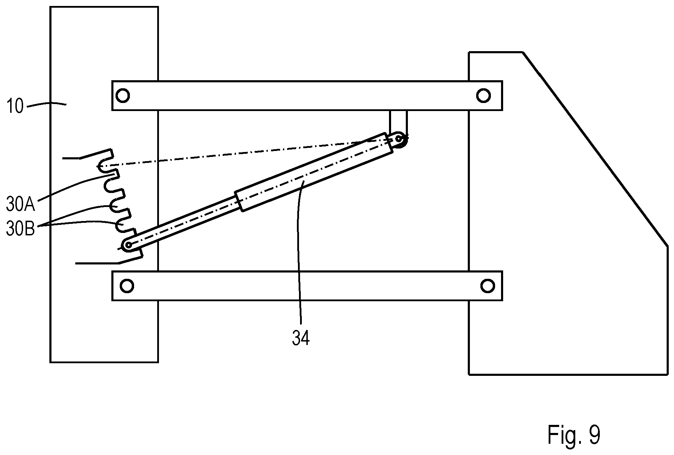

Optionally, the angle the weight control gas spring 34 makes with the horizontal is adjustable, e.g., by adjusting the height of the point where the second gas spring 34 connects to the foot link 30. A more horizontal orientation of the gas spring results in higher pressure of the rotor head on the soil. Higher pressures can be useful, for example for hoeing tough and/or dry soil types, while lower pressures can be used for hoeing softer and/or wet soil types. Figure 9 shows an example of a gas spring 34 with an adjustable angular orientation. The foot linkage 30 comprises a series of cams 30A and recesses or slots 30B. One end of the gas spring 34 can selectively be positioned in one of the slots 30B, while the other end of the gas spring 34 pivots about a fixed point. A simple releasable clip can be used to lock the gas spring in the selected slot, without the need of a specific tool. The higher the selected slot 30B, the more horizontal the position of the gas spring 34. Such a system also makes it easy to replace the gas spring with another gas spring, e.g., of a stiffer type or a less stiff type.

The rotor head 22 comprises a rotary disc 35, which is powered to rotate relative to the swivel arm 21 about a vertical rotor axis of rotation R through the center of the rotary disc 35. The hoeing teeth 18 rotate with the rotary disc 35 and have a downwardly extending section 19 and a horizontal foot section 20 extending inwardly towards the vertical axis of rotation R.

A cylindrical skirt 36 is connected to the hoeing teeth 18 and shields the hoeing teeth 18 to prevent damaging, e.g., of irrigation pipes and hoses on the treated soil surface. The skirt 36 rotates with the rotary disc 35 and the hoeing teeth 18. The skirt 36 has an open top side and an open bottom side. The soil contact surface 38 and the hoeing elements 18 project from the open bottom side. Soil loosened by the hoeing teeth 18 remains in the skirt 36 and moves upwards until it escapes through the open top of the skirt 36.

The rotor head 22 also carries a surface-following member centrally between the hoeing teeth 18. The surface-following member 37 has a lower end defining a cup-shaped soil contact surface 38 with a lowest point aligned with the vertical rotary axis R. During operation, the soil contact surface 38 continuously contacts the soil, while the hoeing teeth 18 extend into the ground. Since the swivel arm 21 can swivel up and down, the rotor head 22 and the soil contact surface 38 follow any height variation of the soil surface.

The level of the hoeing teeth 18 relative to the soil contact surface 38 is adjustable

If the soil contact surface 38 passes a higher part of the soil surface, such as a heap or lump, the rotor head 22 is moved upwardly against the action of the second gas spring 34. If the rotor head 22 passes a pit or pothole, the weight of the rotor head 22 moves the soil contact surface 38 down against the action of the second gas spring 34.

This way, the rotor head 22 will closely follow any height differences of the soil surface.

To prevent damage of trees, the rotor head 22 has a circumferential bumper 40 of a rubber or elastomeric material with a flat and cylindrical circumferential outer surface.

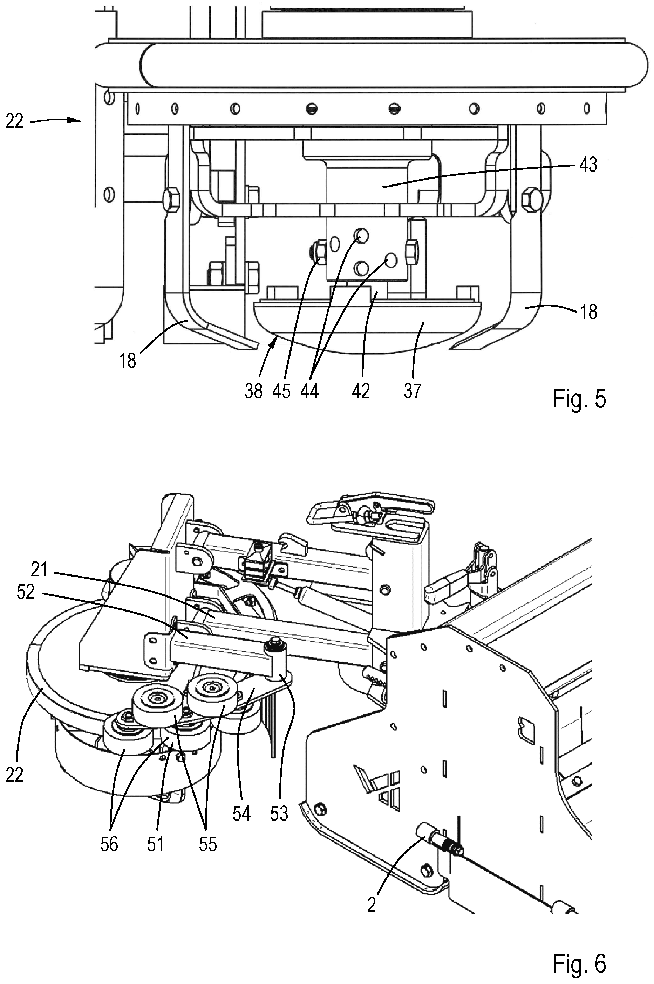

Figure 5 shows a rotor head 22 without the skirt 36 to show more detail, in particular the level adjustment mechanism. The surface following member 37 has a central vertical shaft 42, vertically slidable in a hollow vertical cylinder 43, which is fixed to the rotor head 22. The cylinder 43 is provided with a number of pairs of oppositely arranged holes 44, the pairs being at different levels. The vertical shaft 42 of the surface-following member 37 is provided with a horizontal transversal opening (not shown). A bolt 45 is inserted via one of the pair of holes 44 in the cylinder 43 in the transversal opening of the vertical shaft 42. The level of the hoeing teeth 18 relative to the surface following member 37 can be adjusted by selecting a different pair of holes 44 at a different level and inserting the bolt 45 into the selected pair of holes 44 and the transversal opening in the vertical shaft 42.

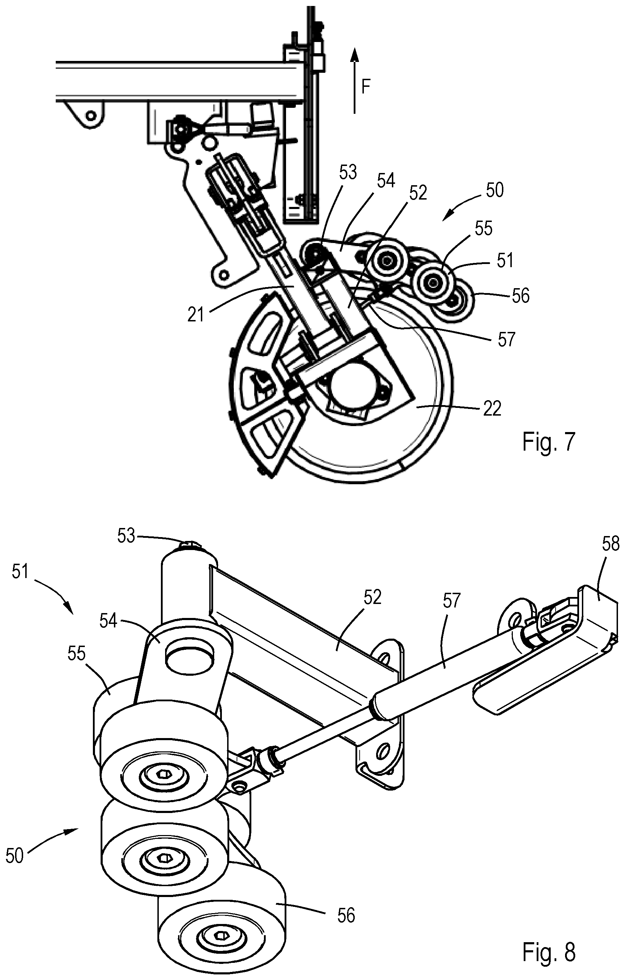

Figures 6 and 7 shows an alternative embodiment of a rotor head 22 comprising an impact absorber 51, shown as a separate part in Figure 8. The impact absorber 51 comprises an arm 52 fixed to an outer end of the swivel arm 21 above the rotor head 22. The arm 52 is parallel to the swivel arm 21 and has a free end pointing towards the frame 2. The free end has a substantially vertical swivel axis 53 connecting to a fender 50 comprising a carrier or strip 54 with an upper side carrying two upper rollers 55 and a lower side carrying three lower rollers 56. The upper and lower rollers 55, 56 have substantially vertical rotational axes. The axes of the upper rollers 55 are centered between the axles of two adjacent lower rollers 56 in a staggered arrangement. Other arrangements of rollers can also be used.

A damper 57 connects the strip 54 to the swivel arm 21. In the shown exemplary embodiment, the damper 57 comprises a gas spring with one end connecting the strip 54 about halfway of the strip's length, and an opposite second end connected to a hinge joint 58 fixed to the swivel arm 21.

When the hoeing machine 1 moves forward (direction F in Figure 7) the rotor head 22 is moved over the soil surface between trees. If a tree is on the rotor head's path, the tree will first hit the rollers 55, 56 of the impact absorber 51 and swivel the strip 54 inwardly against the action of the gas spring 57, until the circumferential edge of the rotor head 22 hits the tree. When the tree is passed, the gas spring will push the impact absorber 51 back into the original position. This way, the impact absorber 51 cushions the impact loads when the rotor head passes a tree or similar obstacle. The rollers 55, 56 roll over the tree surface without sliding or rubbing. This avoids damaging of trees and makes it possible to use the hoeing machine with faster driving speeds.

The terms "horizontal", "vertical", "upward", "downward", "below", "above", and the like relate to the embodiments as oriented during normal, regular use or storage, as shown in the drawings, unless otherwise specified.

The disclosure is not restricted to the above described embodiment which can be varied in a number of ways within the scope of the claims. For example, the hoeing machine can be self-propelled or driven by any other power source than a tractor, or the first gas spring can be replaced by a hydraulic, pneumatic or electric actuator for actively controlling movement of the swivel arm, and/or the swivel arm or arms can be provided with two or more rotor heads.

## Claims

1. Hoeing machine (1) comprising a main frame and at least one swivel arm with at least one rotor head (22) carrying a plurality of downwardly extending hoeing elements (18) and a drive for rotating the rotor head,
wherein the swivel arm comprises a surface-following member (37) arranged to follow a soil surface during movement of the hoeing machine over the soil surface,
wherein the surface-following member comprises a soil contact surface (38) of the rotor head between the hoeing elements,
**characterized in that** the hoeing machine further comprises a weight control gas spring (34) acting against the weight of the rotor head.

2. Hoeing machine according to claim 1, wherein the weight control gas spring has a height adjustable end allowing adjustment of the angle between the gas spring and the horizontal.

3. Hoeing machine according to claim 1 or 2, wherein the swivel arm is pivotable about a vertical axis and at least one horizontal axis, e.g., a horizontal axis making an angle with a longitudinal axis of the swivel arm.

4. Hoeing machine according to claim 1, 2 or 3, wherein the soil contact surface is cup-shaped with a lowest point aligned with the axis of rotation of the rotor head.

5. Hoeing machine according to any one of the preceding claims, wherein the hoeing elements have a cutting level which is adjustable relative to the soil contact surface.

6. Hoeing machine according to any one of the preceding claims, further comprising a biasing element, such as a gas spring, biasing the swivel arm to an extended position, at least during operation of the hoeing machine.

7. Hoeing machine according to any one of the preceding claims, the rotor head having an outer circumferential edge provided with a bumper (40), e.g., of a rubber or elastomeric material.

8. Hoeing machine according to claim 7, wherein the bumper (40) has a flat circumferential outer surface.

9. Hoeing machine according to any one of the preceding claims, wherein the rotor head is provided with a skirt shielding the hoeing elements, wherein the hoeing elements and the soil contact surface project from an open bottom side of the skirt.

10. Hoeing machine comprising at least one rotor head carrying a plurality of downwardly extending hoeing elements and a drive for rotating the rotor head,
wherein the rotor head comprises a surface-following member which is vertically movable to follow a soil surface during movement of the hoeing machine over the soil surface,
wherein the surface-following member comprises a soil contact surface of the rotor head between the hoeing elements;
wherein the hoeing elements have a cutting level which is adjustable relative to the soil contact surface.

11. Hoeing machine according to any one of the preceding claims, further comprising an impact absorber (51) with a fender (50) and a mover or spring element (57), such as a gas spring, forcing the fender to a position in front of the swivel head (22), when viewed in a driving direction.

12. Hoeing machine according to claim 11, wherein the fender (50) comprises a carrier (54), such as a strip or bar, carrying one or more bumping elements, such as rollers (55, 56) with a vertical rotational axis.

13. Hoeing machine according to claim 12, wherein the carrier (54) has one end hinged to the swivel arm (21) or to an arm (52) parallel to the swivel arm (21).

14. Hoeing machine according to claim 11, 12 or 13, wherein the mover (57) comprises a spring, such as a gas spring, or an actuator, such as an electric, pneumatic or hydraulic actuator.

15. Hoeing machine according to any one of the preceding claims 12 - 14, wherein the one or more bumping elements (55, 56) are movable relative to the carrier by impact of an obstacle to be passed, between a primary position and a pressed position where the bumping element engages a contact, e.g., a reed contact, generating a control signal for a control unit of the swivel arm (21) and/or a control unit of the impact absorber (51) to withdraw the swivel arm and/or the impact absorber until the one or more bumping elements (55, 56) move back into its primary position.
